# EUROPEAN PATENT APPLICATION

(11) **EP 2 533 115 A1**
(43) Date of publication of application: **12.12.2012**
(21) Application number: 12171342.4
(22) Date of filing: 08.06.2012
(51) Int. Cl.: G05B 19/042

(54) **Remote-controlled roll-down shutter systems**

(30) Priority: 08.06.2011 BE 201100346
(71) Applicant: Güler, Muzaffer, 3070 Kortenberg (BE)
(72) Inventor: Güler, Muzaffer, 3070 Kortenberg (BE)
(74) Representative: Paemen, Liesbet R.J.

(57) **Abstract**

The present invention concerns remote-controlled roll-down shutter systems, in which the remote control has a screen which can display the actual real-time position of one or more roll-down shutters. The invention also concerns remote controls and motors for these roll-down shutter systems and the use of such remote controls.

## Description

### FIELD OF THE INVENTION

The present invention concerns a roll-down shutter system operated by remote control. The invention also concerns a remote control and a motor for such roll-down shutter systems, and the use of such remote controls.

### BACKGROUND

Household equipment can increasingly be remotely operated via remote controls. Remote control can be used for example for controlling a tubular motor to operate roll-up components like garage doors, roll-down shutters, screens, curtains etc.

Some commercially available remote controls offer the facility of opening or closing a number of roll-down shutters in different locations simply by pressing a button. The remote controls may also be programmable and make it possible to set different scenarios for different points in time. One can open all roll-down shutters on one side of an apartment and close them on another side, for example. As well as the simple commands 'open' and 'close', roll-down shutters can also be set to move to a predefined position.

Sometimes, however, a roll-down shutter does not reach the position the user desires, if the signals that the remote control emits are interfered with, for example, if the motor is faulty, or if there is an obstacle blocking the roll-down shutter. A user or technician such as an installer or repairer who wishes to verify whether a roll-down shutter is actually in the desired position or is working properly must be able to see the roll-down shutter: this is impractical and time-consuming, especially if the roll-down shutters are in different locations in the apartment.

There is therefore a need for closures such as roll-down shutters in which the user can easily verify what position a closure is actually in.

EP 2 196 879 describes an electronic domotics system, whereby the movement of a motorized device such as a sunblind is controlled by a remote control. It describes the bidirectional communication between the motor and the remote control, which can be a palmtop computer, and comprises a screen which represents the position of the sunblind between the end positions. In the systems of D1, the information on the position of the device is updated after the command has been executed. Thus, the position of the device indicated on screen of the remote control corresponds to the position determined by the command and not to the real-time position of the device.

### SUMMARY OF THE INVENTION

The purpose of the present invention is to create a control system for roll-down shutters and the like in which a remote control can call up where a roll-down shutter actually is in real-time and show this on an integrated screen.

In a first aspect, the present invention provides an (electronic) control system for operating the movement of a moveable part between two end positions. The control system includes a motor connected to the moveable part. The control system also includes a remote control, whereby the motor communicates with the remote control via a radio transmitter comprised by the remote control, and a radio receiver comprised by the motor. The control system is also **characterized in that** it includes means for detecting the position or approximate position of the movable part, including one or more positions between the end positions, whereby the means for detecting the position include a radio transmitter and the remote control also has a radio receiver. This enables the user to find out where the movable part actually is at any time without needing to see it. In further embodiments of the present invention, the control system is also **characterised in that** the remote control has a screen on which data can be displayed, more specifically data, which indicate the actual or the approximate position of the movable part. Thus in particular embodiments, the system is **characterized in that** the position of the movable part is detected, transmitted and represented real-time on the screen of the remote control.

This last characteristic enables the user to follow or view the actual position of the shutter on the remote control. In certain embodiments, the screen shows the position or approximate position of the movable part in graphic form.

In certain embodiments, the movable part is a roll-down shutter, roller blind, roller door, sunblind, awning, screen, roller screen, or the like. In certain embodiments, the means for detecting the position or approximate position of the movable part are present on the motor.

In a preferred form, the motor is a rotating motor or tubular motor with winding tube and/or drive shaft, in which the means for detecting the position or approximate position of the movable part count the number of revolutions of the winding tube and/or drive shaft.

In certain embodiments, the remote control communicates with a number of motors of movable parts, whereby data on the position or approximate position of each of the movable parts can be displayed on the remote control screen. The movable parts may be similar or different here. The movable parts can also be shown, optionally, differently on the remote control screen.

In certain embodiments of the control system of the present invention, the motor has a motor ID, the remote control being fitted with a USB connection, which can be connected to a computer-readable medium so that the remote control is suited to receiving a motor ID from the computer-readable medium. In more specific embodiments, the motor is paired with the remote control via a number of steps, including as follows:
a) Enter a motor ID in a computer program;
b) Connect the remote control to a computer comprising the computer program.
   This connection is preferably made via one of the computer's USB ports, but can also be made via an infra-red port, serial port, firewire port etc. The sequence of steps a) and b) is not important;
c) Send the motor ID from the computer software to the remote control connected to the computer;
d) Optionally, break the connection between the remote control and computer;
e) Send the motor ID from the remote control to the motor. This is generally done via the radio transmitter of the remote control and the radio receiver of the motor and, finally
f) If the motor ID present in the motor and the motor ID sent from the remote control to the motor match, accept signals sent by the remote control to the motor to operate the movable part, or
g) If the motor ID present in the motor and the motor ID that the remote control sends to the motor do not match, ignore signals sent by the remote control to the motor to operate the movable part.

In a second aspect, the invention provides a remote control for controlling or operating one or more motors in an electronic control system as in the present invention to initiate the movement of one or more movable parts between two end positions. According to this aspect of the invention, the remote controls comprise a radio transmitter for sending signals from the remote control to one or more of the motors, and a radio receiver to receive signals of one or more motors and/or one or more means connected to one or more movable parts to detect the position or approximate position of one of more of those movable parts. More particularly, the signals contain information on the position or the approximate position of one or more movable parts. In certain embodiments, the remote controls as in this aspect of the invention also comprise a screen for displaying data, whereby those data includes the position or approximate position of the one or more movable parts.

In certain embodiments of these remote controls, the position or approximate position of one of more of these movable parts is the real-time position or approximate position of one or more of these movable parts. In certain embodiments, the screen can show the (approximate) (real-time) position of the one or more movable parts pictorially.

In certain embodiments, the remote control has a USB connection, which can be connected to a computer-readable medium, and the remote control is suited to receive a motor ID from the one or more motors of the control system via the computer-readable medium. In further embodiments, the remote control has a memory for storing instructions to operate the motor, these instructions being received by the computer-readable medium.

In certain embodiments, the data which can be displayed on the remote control screen is selected from the group consisting of a motor number, identification of the position of the one or more movable parts, a time indication, data, an operating instruction for the motor, and combinations thereof.

A further aspect of the invention relates to the use of a remote control according to the present invention, to establish and/or verify the position, more particularly the real-time position, of one or more movable parts. This aspect of the invention is made possible by receiving the signals required from the one or more motors and/or one or more means connected to the one or more movable parts by the remote control's radio receiver and, optionally, displaying those signals as data on a screen of the remote control.

In a further aspect, the invention provides a motor for driving the movement of a movable part between two end positions in an electronic control system in accordance with the present invention. This motor has:
- means for detecting the position or approximate position of the movable part, including one or more positions between the end positions;
- a radio receiver for receiving signals from a remote control as described herein, and
- means for sending radio signals to the remote control, those signals containing information on the position or approximate position of the movable part.

The control system as in the invention has the advantage that a user or a technician can always verify the actual position of one or more movable parts such as roll-down shutters and the like, without having to be in direct visual contact with those movable parts.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.
**Fig. 1****:** Graphic presentation of a remote control (1) according to a particular embodiment of the present invention, in which the remote control indicates the real-time position (a, b, c) of a roll-down shutter (4) driven by a motor (3) on a screen (2).
**Fig. 2****:** Graphic presentation of a remote control (1) according to a particular embodiment of the present invention, in which the remote control (1) indicates the real-time position (a, b, c) of different roll-down shutters (4, 4', 4") driven by motors (3, 3', 3") on a screen (2).

In the figures, the following numbering is used:
1- Remote control; 2 - Screen; 3, 3', 3" - Motor; 4, 4', 4" - Roll-down shutter; 5 - Radio signal; 6 - Position indication; 7 - ID of motor drive, motor number; 8 - Keys

### DETAILED DESCRIPTION

The present invention will be described with respect to particular embodiments but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" when referring to recited components, elements or method steps also include embodiments which "consist of' said recited components, elements or method steps.

Furthermore, the terms "first", "second", "third" and the "like" in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the features of the claimed embodiments can be used in any combination.

The values as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that each value as used herein is itself also specifically, and preferably, disclosed.

The recitation of numerical ranges by endpoints includes all numbers and fractions subsumed within the respective ranges, as well as the recited endpoints.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

In a first aspect, the present invention provides an (electronic) control system to operate the movement of a movable part, whereby the movable part can move between two end positions. The control system comprises a motor connected to the movable part, for moving the movable part. The control system also includes a remote control, which can be used to operate the motor. The motor communicates with the remote control via a radio transmitter present on the remote control, and a radio receiver present on the motor, so that the remote control can communicate wirelessly with the motor.

The system according to the present invention also includes means for detecting the real-time position or approximate position of the movable part between and including the end positions of the movable part. In what follows below, the means for detecting the position or approximate position of the movable part are also referred to as 'position detection means'. The position detection means comprise a radio transmitter or are connected to a radio transmitter such that information concerning the real-time (approximate) position of the movable part can be forwarded wirelessly to the remote control.

The remote control has a radio receiver to receive such information. The remote control is thus provided with a radio transmitter and radio receiver, so the remote control is able to conduct bidirectional communication. The remote control as in the present invention also includes a screen for displaying data, whereby that data includes the (approximate) position of the movable part, more particularly the real-time (approximate) position of the movable part.

These characteristics will be explained in more detail below.

Thus the present invention relates to a control system for moving one or more movable parts. In particular embodiments, the control system is not limited to operating a single movable part, the system being used to operate two or more movable parts, each movable part being connected to a motor, such that the control system comprises two or more motors. The remote control then communicates with the motors of the movable parts, data on the (approximate) position of each of the movable parts being capable of being displayed on the screen. The movable parts need not be in the same room. Typical rooms in which the control system can be used are living rooms, bedrooms, kitchens, bathrooms, meeting rooms, etc.

The control systems in the present invention include at least one remote control. These remote control(s) can operate one or more movable parts. If the user so wishes, the control system can include a number of remote control systems having the same or different functions.

In the systems described herein, the movable part is connected to a motor which directs the movement of said movable part and the motor of said movable part communicates with said one or more remote controls. The movement of the motor can be determined by commands on said remote control. For this the remote control comprises a radio transmitter and the motor comprises a radio receiver. The terms 'radio transmitter' and 'radio sender' are used as synonymous here: these terms mean devices which can be used to emit radio frequency (3 kHz - 300 GHz) signals to be transmitted. The term 'radio receiver' means devices that can be used to receive radio frequency signals.

In certain embodiments, the movable part is a (roll-up) closure such as roll-down shutters, roller blinds, roller doors, roller curtains, sunblinds, awnings, screens and the like. The two end positions are then the 'open' and 'closed' positions'. Positions in between are, for example, half open, etc. The invention can also be used to operate drop curtains such as projection screens. The invention is not limited to operating any one single type of movable part, but can also be used to operate a combination of different movable parts. In certain embodiments, these one or more movable parts are roll-down shutters, roller blinds, roller doors, roller curtains, sunblinds, awnings, screens, rolling screens or combinations thereof.

In particular embodiments of the present invention, the movable part is a roll-down shutter. The term 'roll-down shutter' means a shutter, which, through a connection with the driveshaft of a motor, can be moved upwards or downwards, by movement of the motor. The roll-down shutter could for example serve as a means of closing a window opening partly or completely. Application of the invention provides a roll-down shutter user an increased ease of use. In another preferred form of the invention, the method involves combining a motor with a roller door, such as a garage door.

The systems as in the present invention further use position detection means. These position detection means may be built into the motor or motor housing or may be external to the motor (housing). What type of position detection means are involved is not essential to the present invention, provided these position detection means can be used to detect the real-time (approximate) position of a movable part. Typically, detection of the real-time position involves detection of two or more positions between the end positions, more particularly four or more positions of the movable part between the end positions. In specific embodiments, the position detection means are sensors positioned on the track on which the movable part moves and which can detect different positions of the movable part. The movable part such as a roll-down shutter could for example comprise a magnet at the bottom, so that the position of the roll-down shutter can be detected by Hall sensors located on the track on which the roll-down shutter moves. Alternatively, the roll-down shutter can have a Hall sensor at the bottom, which can detect magnets positioned along the track on which the roll-down shutter moves. In other embodiments, the position detection means are based on the correlation between the operation of the motor and the position of the movable part (see below).

In a preferred form, the position detection means can be used to detect the two end positions and at least two (approximate) positions, preferably at least 4 positions between those end positions. The position detected is generally an approximation of the precise position. The distance between the two end positions could, for example, be divided into a finite number of ranges, with the detector indicating in which range the movable part is. The more ranges, the more precisely the position of the movable part can be determined. According to certain embodiments, there are three, four, five, six, seven, eight, nine, ten, eleven, twelve, thirteen, fourteen, fifteen, sixteen or more ranges. In order to detect the (approximate) position of the movable part, the one or more remote controls of the control systems described herein further comprise a radio receiver, the receiver being capable of receiving data relating to the real-time position or approximate position of said movable part transmitted from the detection means. The one or more remote controls further comprise one or more screens, which display the (approximate) position of the movable part. There are a number of ways in which the (approximate) position of the movable part can be displayed on the screen. The position may be given numerically: this may be a given distance relative to one of the end points or a percentage, such as 80% open, for example. The position can also be indicated graphically, by a bar chart, for example. Such a bar chart could indicate the positions of a number of movable parts simultaneously if necessary.

In a preferred form of the invention, the position is indicated pictorially, and the screen shows a diagrammatic reproduction of the actual position of the movable part. This makes the present system easier to use, as such a reproduction is less abstract than a numerical display. If the same remote control can be used to operate different kinds of movable parts, such as a roll-down shutter and garage door, a different diagrammatic representation can be used for each type of movable part, so the user can easily see which movable part is in what position.

The (approximate) position of the one or more movable parts displayed on the screen of the remote control, is preferably the real-time position of those movable parts. This means that, for instance, when the movable part is in movement, the real-time position of the movable part is displayed continuously on the screen without the user having to request the position repeatedly; in this way the user or technician can check whether a movable part is moving as it should, without requiring visual contact with the movable part. Also, where different movable parts are controlled, this provides an indication at all times of the position of each of the movable parts from one location. Further, this is also of interest for ensuring a movement of the movable part to an intermediate position (i.e. between the end positions) of a movable part from a location where there is no visual contact with the movable part.

The type of screen used for the remote control is not essential to the present invention, provided it can be used to indicate the (real-time) actual position of the moving component. Simple (passive matrix) LCD screens are preferably used because they are relatively cheap and energy-efficient, but TFT screens, touchscreens, etc. may also be used.

In a preferred form, the motor connected to the movable part as in the present invention is a rotatory or tubular motor. Such motors are typically used for closures such as roll-down shutters and the like and include a winding tube and/or driveshaft. In certain preferred forms, the position detection means include devices, which count the number of revolutions of the winding tube and/or driveshaft. A possible embodiment of such a system is described in European patent EP 0552459. A further embodiment of such a system is described in European patent application EP 2140231. If moving from one end position of a movable part to the other end position requires n rotations of the winding shaft, for example, and each individual rotation is detected, the position detection means can distinguish n+1 positions including the end position. If half a rotation can be detected, 2n+1 positions can be distinguished etc. In certain embodiments of the present invention, the number of (partial) rotations detected, whether translated or not into a given position, is sent to the remote control via a radio transmitter, which is connected to the position detection means. The position detection means and their associated radio transmitter are then preferably in the motor (housing).

The radio transmitter and radio receiver in the remote control can share circuits with one another, so forming a transceiver. The motor(s) can also have a transceiver, if the position detection means are in the motor (housing), for example.

The control system radio transmitters and receivers operate on radio frequencies (3 kHz - 300 GHz), so that the signals the radio transmitters transmit can reach the radio receivers even if the transmitter and receiver are located separately divided from one another by one or more walls. The radio transmitters and receivers preferably operate on ultra-high frequencies (300 MHz - 3 GHz). The precise radio frequency at which the radio transmitters operate is not essential, but may depend on regional regulations. Possible frequencies for domestic equipment in Europe are 433 MHz and 868 MHz, for example. In a preferred embodiment, the radio transmitters operate at around 2400 MHz, a frequency band available for domestic equipment amongst others worldwide.

In a preferred form of the control system as in the present invention, the motor which is connected to the movable part has a (first) motor identification (ID), and the remote control can be connected to a computer-readable medium, so that the remote control is suited to receive a (second) motor ID from the computer-readable medium. The remote control is preferably equipped with a USB connection for this. The motor can then be coupled to the remote control in stages, as follows:
a) Enter a (second) motor ID in a computer program.
b) Connect the remote control to a computer comprising the computer program.
   This connection is preferably via one of the computer's USB ports, but could also be via an infra-red port, serial port, firewire port, etc. The sequence of steps a) and b) is unimportant.
c) Copy the (second) motor ID from the computer program to the remote control connected to the computer.
d) Optionally, interrupt the connection between the remote control and the computer.
e) Transmit the (second) motor ID from the remote control to the motor. This is generally done via the radio transmitter of the remote control and the radio receiver of the motor.
f) If the (first) motor ID present in the motor and the (second) motor ID sent from the remote control to the motor match (first motor ID = second motor ID), accept signals sent by the remote control to the motor to operate the movable part.
g) If the (first) motor ID in the motor and the (second) motor ID the remote control sent to the motor do not match (first motor ID ≠ second motor ID), reject signals the remote control sends to the motor to operate the movable part.

This method uses a computer program to pair a motor with a remote control of a motor. The computer program pairs the motor ID code with the remote control ID code. This method has the advantage that the individual steps of the method can be performed in different places and/or spread over time. The term 'pair' or 'pairing' means an activity which gives rise to a pair, particularly a pair of devices. In the present invention, a 'pair' means a remote control and a motor, in which the motor recognises signals from a remote control it is paired with, and executes them. The term 'coupling' may be considered synonymous.

This method for pairing one or more remote controls with one or more motors has the benefit that the individual steps of the method can be performed in different places and/or spread over time. That means there is no need for a technician to go to the location where the movable part is to pair a remote control with a motor. This method also allows a number of remote controls to be connected to a motor by entering the motor ID of that motor in each remote control via the steps as described above.

In a preferred embodiment, the remote control used in the control systems as in the present invention can be paired with more than one motor to operate more than one movable part. Each motor then has a unique motor ID, the remote control can be paired with each motor via the steps in the method as described above, spread over time as the case may be. When pairing the remote control with more than one motor, it is not necessary to repeat all steps for each motor. It is sufficient, for example, that step b) be performed once, steps a) and c) being repeated for each motor. Steps e) - and f) and/or g) - can be performed once step c) has been performed for all motors, for example.

The position detection means in these embodiments are preferably connected to the motor, such that pairing the remote control with the motor automatically pairs the remote control with the position detection means connected to the motor. If the position detection means are outside the motor, and not connected to it, pairing the remote control with the position detection means can be done separately via the position detection means having their own ID(s).

If the user wishes to know the (real-time)(approximate) position of a movable part, he can select the movable part concerned via the remote control. The real-time position of the movable part then appears on the remote control screen. In further preferred embodiments, the user can select more than one movable part at the same time, the real-time positions of the movable parts being shown on the screen simultaneously. According to one embodiment, if the user or technician selects a movable part via the remote control, the remote control sends a signal to the motor concerned (or the position detection means, if these are not connected to the motor). This signal contains a request to send data on the position of the movable part concerned (also referred to hereinafter as 'request signal') to the remote control. In further embodiments, if the user or technician select one or more movable parts, the remote control sends request signals periodically to the motors or position detection means concerned: so the remote control periodically receives information on the (approximate) position of the movable part so the remote control can reproduce the real-time (approximate) position of the movable part. In this case, the position detection means comprise a radio receiver, or the position detection means are connected to a radio receiver so that the position detection means can receive the request signals the remote control transmits.

Sending periodic request signals is preferably done at a frequency between 30 Hz and 1 Hz. In certain embodiments, the remote control sends the periodic request signals for a period of time between 30 seconds and 2 minutes from when the user or technician selects the movable part concerned; after that time, the remote control then stops sending signals until the user or technician activates the remote control again. The user can activate the remote control by pressing a key on the remote control or touching the touchscreen of the remote control, depending on how the remote control is designed.

In a preferred embodiment, the motor has a radio transmitter, or the motor is connected to a radio transmitter, and the motor sends a signal concerning the status of executing a command (or 'status signal') to the remote control. This command, e.g. 'open', 'close', or 'open 50%', is a command sent via the remote control. A status signal may be sent at regular intervals, at a frequency between 30 Hz and 1 Hz, for example. The status signal is 'opening in progress' or 'closing in progress', for example. Optionally, the status signal can also include information on the position of the movable part. Once the command is executed completely, the motor preferably sends a confirmation signal to the remote control, such as 'opening complete' or 'closing complete', for example. If the remote control sends request signals periodically as described above, the remote control preferably stops sending these request signals once the confirmation signal is received. The remote control then stops sending signals until the user or technician activates the remote control again as described above. In a further embodiment, the remote control also displays the status signal and/or confirmation signal. This can be done on the screen or via one or more LEDs incorporated in the remote control.

The remote control is preferably used when disconnected from the computer. The remote control preferably has a memory in which data from the computer program can be stored. The remote control is operated by data received from the computer program. This information preferably includes timer data for remotely operating one or more motors connected to the remote control. Timer data is preferably selected from a list consisting of a motor ID number, an ID of the roller blind, roll-down shutter, rolling door, sun awning, sunblinds or such closures, a time, a date, an operating instruction for the motor, and/or combinations thereof.

The signals that the remote control sends are capable of operating the motor. The signals may be commands for moving the motor operating a roller blind, roll-down shutter, rolling door, sun awning, sunblinds or such closures. The commands may be to move a roller blind, roll-down shutter, rolling door, sun awning, sunblind or such closures attached to a roller motor up or down. The commands may cause a roll-down shutter to start or stop moving. The signals may include a request to send the position of a movable part from the position detection means to the remote control.

In a certain embodiment of the invention, in which the motor has a motor ID, the motor ID is affixed to the outside of the motor by way of a label. This has the advantage that the ID assigned to the motor is clearly visible and can be read off without having to open the motor. In a preferred form of the invention, the motor ID affixed to the motor is a human- or computer-readable ID. This has the advantage that a user can read the ID and forward it to the computer program, by telephone, for example. Assigning an ID to a motor can be done as follows. A unique number is generated between 000,000,000,001 and 4,294,967,296 (256 x 256 x 256 x 256). This number is then put on a label, and the label is glued to the motor tube. In another preferred form of the invention, the motor ID is a bar code: this has the advantage that reading the motor ID can be automated, by reading the barcode with a barcode reader, for example, reducing the risk of error. It enables an expert to read data into his database easily. This can be connected to customer and maintenance data, enabling an increased level of service to be provided. This can reduce the number of actions required to transfer data.

The term computer-readable medium means a medium suited to be a carrier for a computer program. Examples of computer-readable media are a USB stick, a CD (compact disk), a DVD, a computer diskette and a memory board. In a preferred form of the invention, the computer-readable medium is a CD. The abbreviation USB stands for the term 'Universal Serial Bus'; a USB connection means a USB input, also known as a USB port, or USB output. The USB connection is preferably a USB output. A USB is completely plug-and-play, there is nothing else the user needs to set. A USB is a standardised connector to which peripherals can be connected. USBs typically transfer data at approx. 12 Mbit/sec. The bus uses a voltage of around 5 V.

In a second aspect, the present invention provides a remote control for operating one or more motors in an electronic control system as described herein for operating the movement of one or more movable parts between two end positions. The remote control as in this aspect of the invention has:
- A radio transmitter for sending signals from the remote control to the one or more motors in the control system;
- A radio receiver for receiving signals from the one or more motors and/or one or more position detection means, the signals containing information on the (approximate) position of the one or more movable parts, and
- A screen for reproducing data, that data including the (approximate) position of one or more movable parts.

The (approximate) position of the one or more movable parts is preferably the real-time position of those movable parts. That means that, if the movable part is in movement, the real-time position of the movable part is displayed without the user having to request the position repeatedly: so the user or technician can check whether a movable part is moving as it should, without having to see it.

The (approximate) position can be displayed on the remote control screen digitally or graphically as described above. In a preferred form, the (approximate) position of one or more movable parts can be reproduced pictorially.

In one embodiment, the remote control has a USB port or USB connection, which can be connected to a computer-readable medium and the remote control is capable of receiving a motor ID from the one or more motors via the computer-readable medium. This has the advantage that the remote control can thus be paired with one or more motors as described above.

In a preferred form of a use as in the invention, the USB output is provided at one output of the remote control, and the opposite output of the remote control has a radio transmitter. One advantage of this embodiment is that a remote control can send this to the opposite output signal via the transmitter even when it is connected via the USB-output to a computer. This is advantageous for example in a remote control, which operates more than one device and has to get data from the computer to select from among them.

The remote control preferably has keys, such that the user can enter certain commands, call up information and navigate between different menus. More particularly, if a remote control is paired with different movable parts, the keys can be used to call up data from the different movable parts. It goes without saying in this context that the different commands which are used to operate the motor of the movable part can also be provided optionally.

In certain embodiments, the remote control has a touchscreen.

In certain embodiments, the remote control has a memory for storing instructions for operating the motor of a movable part (or the different motors of different movable parts). In another embodiment, these instructions are received from a computer-readable medium as was described above. In a preferred form, the memory can store instructions to operate two or more motors.

In a preferred form, the data which can be reproduced on screen is selected from a list containing a motor number, an ID of the roller blind, rolling shutter, rolling door, sun awning, sunblinds or such closures, a time display, data, operating instructions for the motor and/or combinations thereof.

The motor number is preferably not the same number as the motor ID number as described above, but a random number, for example, which the remote control assigns to the motor concerned. This ID can be any desired ID the user can use to identity roll-down shutters and the like. Possible IDs could be such things as 'Kitchen', 'Living room', Living room 1' etc., and operating instructions 'Open', 'Close', 'Open 50%', for example.

In certain embodiments of the remote controls according to the present invention, the one or more movable parts are selected from a list containing roll-down shutters, roller blinds, roller doors, sunblinds, awnings, screens, roller screens, and the like.

In a third aspect, the present invention provides the use of a remote control as described above to determine and verify the position, more particularly the real-time position, of a movable part.

In a fourth aspect, the present invention concerns a motor for operating the movement of a movable part between two end positions in an electronic control system as described herein. According to this aspect of the invention, the motor includes:
- means for detecting the (approximate) position of the movable part, including one or more positions between the end positions;
- A radio receiver for receiving signals from a remote control, and
- means for sending radio signals to the remote control, those signals containing information on the position or approximate position of the removable part.

In particular embodiments, the motor comprises a memory, which can hold the position of the movable part, for example. This is particularly advantageous if the position of the roll-down shutter is detected indirectly, from the number of times the motor shaft has rotated, for example. The motor can also be equipped with devices for detecting defects or faults that generate fault reports. Such fault reports can also be stored in the motor's memory.

The present invention will be illustrated by the non-limitative embodiments below.

### EXAMPLES

### 1) Displaying the real-time position of a roll-down shutter on a remote control

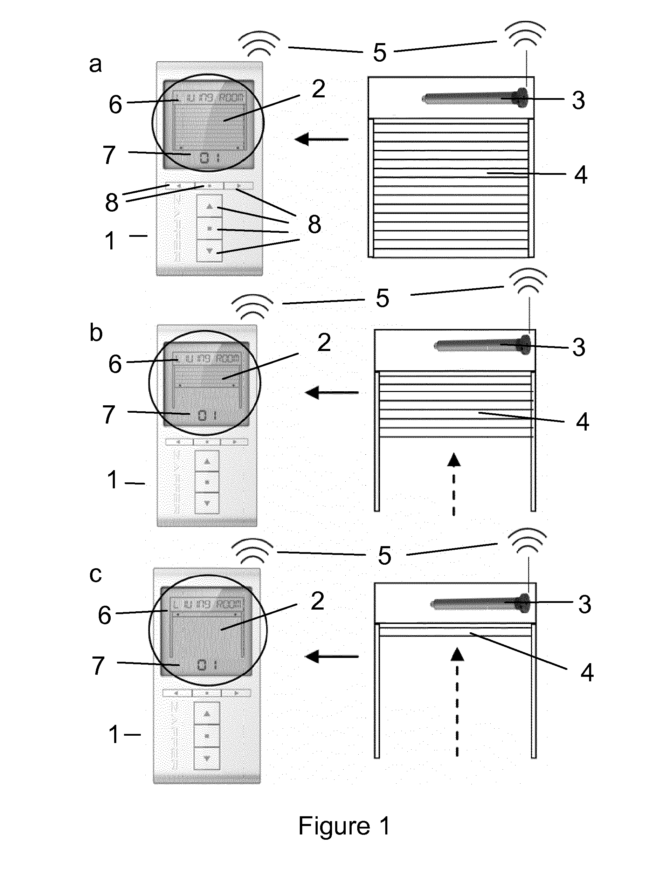

Fig. 1 shows a graphic representation of a remote control (1) according to an embodiment of the invention, in which the real-time position of a roll-down shutter (4) operated by a motor (3) is displayed on the screen (2) of the remote control. The remote control (1) and motor (3) communicate by radio signals (5). For this, the remote control and motor each have a radio transmitter and receiver (not shown). The motor shares this radio transmitter and receiver with internal position detection means (not shown). The remote control sends operating signals to the motor and the motor sends data on the position of the roll-down shutter (4) to the remote control. The remote and motor thus communicate bi-directionally.

The real-time position of the roll-down shutter is shown pictorially on the screen (2). Figs. 1a, b and c show the same remote control and roll-down shutter with the roller blinds in different positions of the roll-down shutter. Even while the roll-down shutter is moving (indicated by the dotted arrows in Figs. 1b and c), the position of the roll-down shutter is shown in real-time on screen (2). As well as reproducing the roll-down shutter in pictorial form, the screen also shows where the roll-down shutter (6) is and the corresponding motor number (7) on the remote control.

The remote control also has keys (8), which enable the user to enter certain commands, such as 'open', 'close' and 'stop' to select a given movable part if different movable parts are paired with a single remote control, for example.

### 2) Displaying real-time positions of multiple roll-down shutters on a remote control

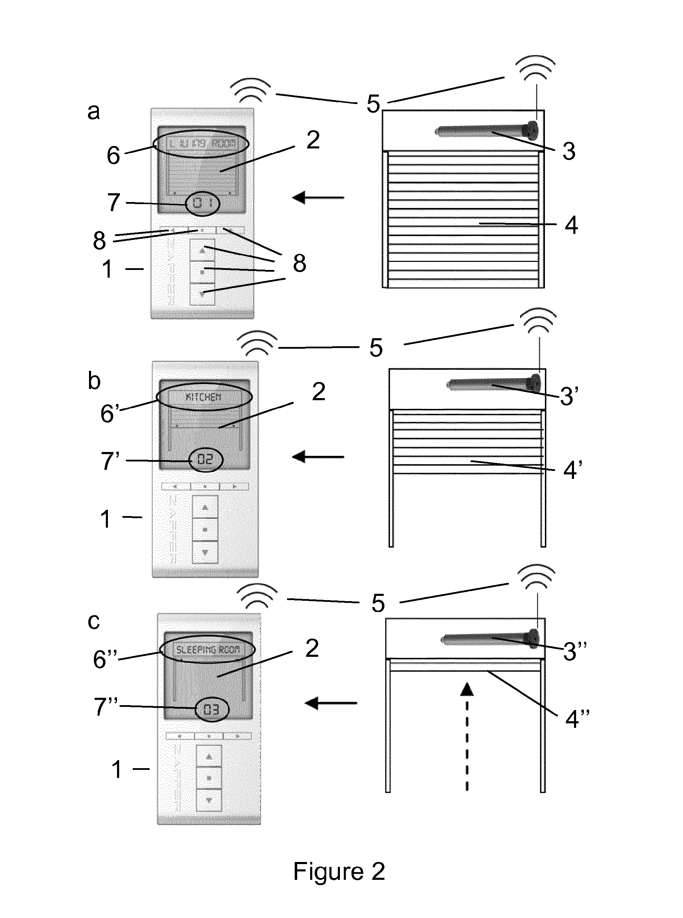

Fig. 2 shows, again, a graphic representation of a remote control (1) as in an embodiment of the invention, in which a single remote control can operate the motors (3, 3', 3") of three different roll-down shutters (4, 4', 4"), and in which the real-time position of each roll-down shutter (4, 4', 4") can be shown on the remote control screen (2). The remote control (1) and motor (3) communicate bi-directionally, again via radio signals (5). The roll-down shutters are in different places in the apartment (a: living room; b: kitchen; c: bedroom). Users can select any of these roll-down shutters, the position of the roll-down shutter selected then being shown on the screen. The user can do this without moving. As well as displaying the roll-down shutter pictorially, the screen also displays where each roll-down shutter is (6, 6' and 6") and the corresponding motor number (7, 7' and 7") on the remote control.

## Claims

1. An electronic control system for operating the movement of a movable part between two end positions, comprising a motor connected to the movable part, and a remote control, wherein said motor communicates with said remote control by means of a radio transmitter present on said remote control, and a radio receiver present on said motor, **characterised in that**:
- said system further comprises means for detecting the real-time position or approximate position of said movable part, whereby said means for detecting the position comprise a radio transmitter for transmitting data relating to said real-time position or approximate position of said movable part, and
- said remote control further comprises a radio receiver, said receiver capable of receiving said data relating to the real-time position or approximate position of said movable part and a screen displaying said data.

2. The electronic control system according to claim 1, wherein said movable part is a roll-down shutter, roller blind, roller door, sunblind, awning, screen, roller screen, or the like.

3. The electronic control system according to claim 1 or 2, in which said means for detecting the position or approximate position of the movable part are present on the motor.

4. The electronic control system according to any one of claims 1, 2 or 3, in which said motor is a tubular motor with a winding tube and/or driveshaft, and wherein said means for detecting the position or approximate position of said movable part count the number of revolutions of the winding tube and/or driveshaft.

5. The electronic control system according to any of claims 1 to 4, in which said screen displays the real-time position or approximate position of the movable part graphically.

6. The electronic control system according to any one of claims 1 to 5, in which said remote control communicates with a number of motors of movable parts and data on the position or approximate position of each movable part can be displayed on the screen.

7. The electronic control system according to any one of claims 1 to 6, in which said motor comprises a first motor ID, in which the remote control has a USB connection which can be connected to a computer-readable medium such that the remote control is capable of receiving a motor ID from the computer-readable medium, and in which the motor can be paired with the remote control in steps as follows:
a) entering a motor ID in a computer program;
b) connecting the remote control to a computer containing the computer program;
c) sending the motor ID from the computer program to the remote control connected to the computer;
d) optionally, disconnecting the remote control from the computer;
e) sending the motor ID from the remote control to the motor;
f) comparing the motor ID sent from the remote control to the motor with the motor ID present in the motor;
g) if the motor ID in the motor and motor ID sent from the remote control to the motor match, accept signals the remote control sends to the motor to operate the movable part, and
h) if the motor ID in the motor and the motor ID the remote control sends the motor do not match, ignore signals the remote control sends to the motor to operate the movable part.

8. A remote control for operating one or more motors in an electronic control system according to any one of claims 1 to 7, to operate the movement of one or more movable parts between two end positions, comprising:
- a radio transmitter for sending signals from the remote control to said one or more motors;
- a radio receiver for receiving signals from said one or more motors and/or one or more means connected to the one or more movable parts for detecting the position or approximate position of the one or more movable parts, whereby the signals contain information on the position or approximate position of the one or more movable parts, and
- a screen for displaying data, whereby that data includes the real-time position or approximate position of the one or more movable parts.

9. The remote control according to claim 8, in which the screen can display the position of the one or more movable parts pictorially.

10. The remote control according to any of claim 8 or 9, in which the remote control has a USB connection which can be connected to a computer-readable medium and is suited to receive a motor ID of the one or more motors via the computer-readable medium.

11. The remote control according to claim 10, further comprising a memory for storing instructions to operate the motor received from the computer-readable medium.

12. The remote control according to any one of claims 8 to 11, wherein said data is selected from the group consisting of a motor number, an identification of the location of the one or more movable parts, a time indication, a date, an operating instruction for the motor, and combinations thereof.

13. The remote control according to any one of claims 8 to 12, in which the movable part is a roll-down shutter, roller blind, sliding door, sunblind, awning, screen, roller screen, or the like.

14. Use of a remote control according to any one of claims 8 to 13 to establish and verify the real-time position of a movable part.

15. A motor for operating the movement of a movable part between two end positions in an electronic control system according to any one of claims 1 to 7, comprising:
- means for detecting the position or approximate position of the movable part, including one or more positions between the end positions;
- a radio receiver for receiving signals from a remote control according to any one of claims 8 to 13, and
- means for sending radio signals to the remote control, those signals comprising data on the position or approximate position of the movable part.
